# EUROPÄISCHE PATENTSCHRIFT

(11) **EP 0 408 996 B1**
(45) Veröffentlichungstag und Bekanntmachung des Hinweises auf die Patenterteilung: **26.07.1995**
(21) Anmeldenummer: 90112818.1
(22) Anmeldetag: 05.07.1990
(51) Int. Cl.: B29C 47/34

(54) **Abzugsvorrichtung für Schlauchbahnen aus Kunststoffolie**
Haul-off apparatus for plastic tubular films
Dispositif de tirage de films tubulaires en matière plastique

(30) Priorität: 19.07.1989 DE 8908769 U
(43) Veröffentlichungstag der Anmeldung: 23.01.1991
(73) Patentinhaber: Reinhold, Klaus, 49525 Lengerich (DE)
(72) Erfinder: Reinhold, Klaus, 49525 Lengerich (DE)
(74) Vertreter: Busse & Busse Patentanwälte

(56) Entgegenhaltungen:
- US-A- 3 716 322
- US-A- 3 768 949
- US-A- 3 804 572

## Beschreibung

Die Erfindung betrifft eine Abzugsvorrichtung für von einem Extruder mit ortsfest angeordnetem Blaskopf hergestellte Schlauchbahnen aus Kunststoffolie nach dem Oberbegriff des Patentanspruchs 1.

Bei der Herstellung von Schlauchbahnen aus Kunststoffolie im Blasverfahren lassen sich Dickentoleranzen nicht vermeiden. Diese entstehen z.B. aufgrund der üblichen Fertigungstoleranzen im Blaskopf des für die Folienherstellung verwendeten Extruders, in der im Anschluß an den Extrusionsvorgang von der Schlauchbahn mit aufgeweitetem Rundquerschnitt durchlaufenen Kalibriereinrichtung, durch die Innen- und Außenkühlung oder durch andere äußere Umstände. Beim Aufwickeln derartiger Schlauchfolienbahnen im flachgelegeten Zustand in einer Wickelvorrichtung würden sich durch Addition der Dickentoleranzen ohne geeignete Gegenmaßnahmen auf dem Folienwickel Ringwülste bilden, die eine bleibende Deformation der Folie in diesem Bereich zur Folge hätten und das Bedrucken und die Weiterverarbeitung der Folienschlauchbahn erschweren würden.

Als geeignete Gegenmaßnahme zur Verhinderung der Ringwulstbildung auf dem Folienwickel sind sog. reversierende Abzugsvorrichtungen für die Schlauchbahn entwickelt worden, bei denen die Reversierbewegung der beteiligten Vorrichtungsteile beim Flachlegen der Schlauchbahn ein periodisches Wandern der Faltkanten bewirkt, die sich beim Flachlegen der Schlauchbahn bilden. Damit einher geht eine entsprechende Verteilung etwaiger Dickentoleranzen über die Breite der flachgelegten Schlauchbahn. Beim anschließenden Aufwickeln der flachgelegten Schlauchbahn in einer Aufwickelvorrichtung ist auf diese Weise die Bildung von Ringwülsten auf dem Wickel durch Addition von Dickentoleranzen der Folie vermieden. Es versteht sich, daß dabei der Schwenkwinkel der Reversierbewegung ausreichend groß gewählt werden muß.

Bei einer bekannten Vorrichtung (DE-C-20 35 584) wird die Flachlegevorrichtung mit ihren Abquetschwalzen über etwa 360° reversierend um die Achse der zugeführten Schlauchbahn geschwenkt, und es hat sich gezeigt, daß dieser Schwenkwinkel einer Reversierbewegung für die überwiegende Zahl von Anwendungsfällen einer reversierenden Abzugsvorrichtung angemessen ist, wobei neben den beiden Umlenkwalzen zum Umlenken der Bahn um etwa 180° zwei Wendestangen zum Umlenken der Bahn um etwa 180° unter gleichzeitiger Richtungsänderung hintereinander und miteinander abwechselnd vorgesehen sind. Andererseits kann in den Anwendungsfällen, in denen der Schwenkwinkel der Reversierbewegung der Flachlegevorrichtung mit ihren Abquetschwalzen weniger als 360° beträgt, eine einzige Wendestange zwischen den beiden Umlenkwalzen für die Handhabung der Schlauchbahn im reversierenden Teil der Abzugsvorrichtung ausreichen.

Bei der bekannten Abzugsvorrichtung ist die um die Achse der zugeführten Schlauchbahn schwenkbare Abstützung der Umlenkwalzen und der Wendestangen in der Vorrichtung in der Weise vorgenommen, daß die Achsen der Umlenkwalzen und der Wendestangen tangential zu Kreisen um die Drehachse der Flachlegevorrichtung verlaufen, wobei die Umlenkwalzen sich in jeder möglichen Betriebsstellung radial außerhalb der von der Schlauchbahn umschlungenen Teile der Wendestangen befinden. Die Schwenkwinkel der Umlenkwalzen und der Wendestangen nehmen mitsteigender Entfernung von der Flachlegevorrichtung ab, und der Folienschlauch wird zwischen den Umlenkwalzen und Wendestangen sowie der ortsfesten Fördereinrichtung zum Abtransportieren der flachgelegten Schlauchbahn in zueinander parallelen, horizontalen Ebenen geführt. Hierdurch ist eine geringe Bauhöhe des reversierenden Systems erreicht, wobei außerdem durch die Maßnahme, daß der Radius des von dem Schwenkweg der Achsen der Wendestangen umschriebenen Kreises die Größe π/4 x Wendestangendurchmesser beträgt, einem seitlichen Verlaufen der Kunststoffolien-Schlauchbahn während des Verschwenkens des Reversiersystems entgegengewirkt wird. Dabei ergibt sich, daß der Schnittpunkt der Mittenachsen der auf die Wendestange jeweils zu- und von der Wendestange jeweils ablaufenden Schlauchbahnstränge in der zentralen Schwenkachse des reversierenden Systems liegt. Während der reversierenden Schwenkbewegung ist so gewährleistet, daß sich die Schlauchbahnstränge scherenartig um die Schwenkachse öffnen und schließen, so daß theoretisch auf beide Schlauchbahnstränge symmetrisch einander entgegengesetzte gleiche Reibungskräfte einwirken und somit von der Konzeption her axiale Verschiebungen der Schlauchbahn auf den Wendestangen während des Reversierbetriebes infolge einseitig wirkender Reibungskräfte vermieden sind.

Bei der bekannten Abzugsvorrichtung sind die Flachlegevorrichtung, die Umlenkwalzen und die Wendestangen sämtlich an einer relativ dünnen Mittelwelle zur Ausführung ihrer reversierenden Schwenkbewegungen abgestützt, die in der vertikalen Verlängerung der Achse der zugeführten Schlauchbahn verläuft und im Vorrichtungsgestell drehbar gelagert ist. Das gesamte Gewicht des reversierenden Systems wird dabei von der Mittelwelle getragen, mit der Folge, daß das reversierende System sehr anfällig für Schwankungen und Pendelbewegungen ist, die sich, insbesondere bei einer infolge eines langen vertikalen Abzugswegs entsprechend hoch angeordneten Abzugsvorrichtung, sehr schnell einstellen, wenn sich beispielsweise eine Bedienungsperson auf dem zugehörigen Laufsteg der Abzugsvorrichtung bewegt. Außerdem gestalten sich die Montage und die Wartung des bekannten Reversiersystems und insbesondere auch das Einführen der Schlauchbahn in die Abzugsvorrichtung zu Beginn eines Extrusionsvorgangs wegen der in der Vorrichtungsmitte in Verlängerung der Achse der zugeführten Schlauchbahn angeordneten Tragwelle zeitraubend und umständlich, da dieser mittlere Bereich schwer zugänglich ist und zum Teil von der durch die Vorrichtung hindurchgeförderten Schlauchbahn eingenommen wird.

US-A-37 16 322 beschreibt eine bekannte Abzugsvorrichtung gemäß dem Gattungsbegriff des Patentanspruchs 1 mit mehreren senkrecht übereinander angeordneten Drehkränzen. Ein Drehkranz ist hierbei von einem T-Profil gebildet und in einem mit reibungsmindernden Rollen versehenen ortsfesten Außenkranz gelagert, der wiederum an senkrechten ortsfesten Säulen befestigt ist. Die einzelnen Drehkränze sind unter Einhaltung eines gegenseitigen vertikalen Abstands in der Vorrichtung gehalten. Diese Ausbildung der bekannten Vorrichtung kann ihrerseits störende Schwankungen und Pendelbewegungen des reversierenden Systems verursachen.

Der Erfindung liegt die Aufgabe zugrunde, eine Abzugsvorrichtung der gattungsgemäßen Art unter Beibehaltung der anhand der eingangs genannten DE-C-20 35 584 erläuterten Kinematik des reversierenden Systems und der dadurch erreichten kontrollierten Führung der Schlauchbahn von einem ortsfesten Schlauchfolienblaskopf durch die reversierende Abzugsvorrichtung zu einer ihrerseits ortsfesten Wickelvorrichtung zu schaffen, bei der das reversierende System eine verbesserte, störende Schwankungen und Pendelbewegungen vermeidende Stabilität besitzt und zugleich die Montage und Wartung des Systems sowie das Einführen der Schlauchbahn erleichtert sind.

Diese Aufgabe wird nach der Erfindung durch eine Ausgestaltung der Abzugsvorrichtung gemäß dem Patentanspruch 1 gelöst. Bei dieser Ausgestaltung werden die reversierend verschwenkten Teile der Vorrichtung an Drehkränzen abgestützt, deren Innendurchmesser zumindest gleich der maximalen Arbeitsbreite der Vorrichtung ist, die der größtmöglichen, in der Vorrichtung handhabbaren Bahnbreite der flachgelegten Schlauchbahn entspricht, d.h. der Innendurchmesser der Drehkränze ist in etwa gleich der Länge der Umlenkwalzen.

Aufgrund dieser Maßverhältnisse stellt das von den einzelnen Drehkränzen gebildete Drehkranzpaket ein stabiles Gebilde dar, in dem die Drehkränze lediglich über die zwischengelegten Wälzkörper aufeinander abgestützt sind und das Drehkranzpaket von der Lagerkraft her als Axiallager gestalten. Durch diese Gestaltung sind störende Schwankungen bzw. Pendelbewegungen beim Begehen eines am Vorrichtungsgestell angebrachten Lauf- bzw. Arbeitsstegs praktisch ausgeschlossen. Aufgrund ihres großen, vorzugsweise bei sämtlichen Drehkränzen gleichen Innendurchmessers ist überdies der mittlere Bereich des reversierenden Systems der Abzugsvorrichtung, in dem die vertikal hochgeführte Schlauchbahn dem System zuläuft, von solchen Vorrichtungsteilen freigehalten, die die Montage und die Wartung erschweren oder das Einführen der Schlauchbahn zu Beginn eines Extrusionsvorgangs behindern oder umständlich gestalten könnten.

Zahlreiche weitere Merkmale und Vorteile der Erfindung ergeben sich aus den Unteransprüchen und der nachstehenden Beschreibung in Verbindung mit der Zeichnung, in der ein Ausführungsbeispiel des Gegenstands der Erfindung schematisch veranschaulicht ist. In der Zeichnung zeigen:
- Fig. 1: eine teilweise geschnittene Ansicht einer reversierenden Abzugsvorrichtung für Schlauchbahnen aus Kunststoffolie, in Richtung des Pfeils I der Fig. 4 gesehen,
- Fig. 2: eine teilweise geschnittene Ansicht der reversierenden Abzugsvorrichtung, in Richtung des Pfeils II der Fig. 4 gesehen,
- Fig. 3: eine teilweise geschnittene vergrößerte Detailansicht einer bei der reversierenden Abzugsvorrichtung Anwendung findenden Antriebseinrichtung,
- Fig. 4: eine Draufsicht auf die Abzugsvorrichtung gemäß den Fig. 1 bis 3 in einer Mittelstellung des Reversierweges der Flachlegevorrichtung,
- Fig. 5 bis 8: Darstellungen entsprechend Fig. 4 zur Verananschaulichung unterschiedlicher Betriebsstellungen der reversierenden Teile der Abzugsvorrichtung, jeweils nach einem Schwenkweg der Flachlegevorrichtung von +90° und +180° bzw. -90° und -180°, ausgehend von der Mittelstellung gemäß Fig. 4, und
- Fig. 9 u. 10: je eine vereinfachte Darstellung einer abgewandelten Ausführungsfom der reversierenden Abzugsvorrichtung mit einer verstellbaren Wendestange.

Eine Schlauchbahn 1 aus Kunststoffolie wird von einem Extruder mit ortsfest angeordnetem Folienblaskopf (nicht dargestellt) mit aufgeweitetem Rund- bzw. Kreisquerschnitt einer als Ganzes mit 2 bezeichneten Abzugsvorrichtung zugeführt, über die die aufgeweitete Schlauchbahn 1 unter Flachlegung abgezogen und einer Wickelvorrichtung (nicht dargestellt) zugeführt wird, in der die flachgelegte Schlauchbahn zu einem Vorratswickel aufgewickelt wird. Die Schlauchbahn 1 wird dabei in senkrechter Richtung vom Blaskopf des Extruders über eine größere Strecke, wie sie zur Abkühlung und Verfestigung der Kunststoffolie erforderlich ist, nach oben zur Abzugsvorrichtung 2 geführt, die demgemäß üblicherweise im Deckenbereich einer entsprechenden Fabrikationshalle angeordnet ist.

Hierzu umfaßt die Abzugsvorrichtung 2 ein Vorrichtungsgestell 3, das mit vier senkrechten Stützen 4, 5, 6 und 7 auf dem Hallenboden abgestützt ist. Die Stützen 4 bis 7 tragen einen oberen horizontalen Auflagerteil 8, auf dessen inneren, der Schlauchbahn 1 zugewandten Endbereichen oberseitig ein Halterahmen 9 für ein Drehkranzpaket 10 abgestützt ist. Das Drehkranzpaket 10 setzt sich aus senkrecht übereinander angeordneten einzelnen Drehkränzen 11, 12, 13 und 14 zusammen, die untereinander gleiche Innen- und Außendurchmesser aufweisen, wobei ihr Innendurchmesser außerdem mit dem Innendurchmesser des Halterahmens 9 fluchtet.

Die Drehkränze 11, 12, 13 und 14 sind über zwischengelegte Wälzkörper 15, bei dem dargestellten Beispiel Kugeln, unmittelbar aufeinander bzw. auf dem Halterahmen 9 abgestützt und bilden so ein auf Druck beanspruchtes Axiallager. Die Drehkränze 11 bis 14 ruhen dabei frei drehbar aufeinander und lassen sich beliebig zueinander verdrehen. Die Wälzkörper bzw. Kugeln 15 sind in Laufrillen 16, die in den einander gegenüberliegenden Stirnflächen der Drehkränze 11 bis 14 bzw. des Haltrahmens 9 eingearbeitet sind, mit engem Laufspiel geführt, so daß unerwünschte Querbewegungen der einzelnen Drehkränze im Drehkranzpaket 10 in horizontalen Ebenen praktisch ausgeschlossen sind.

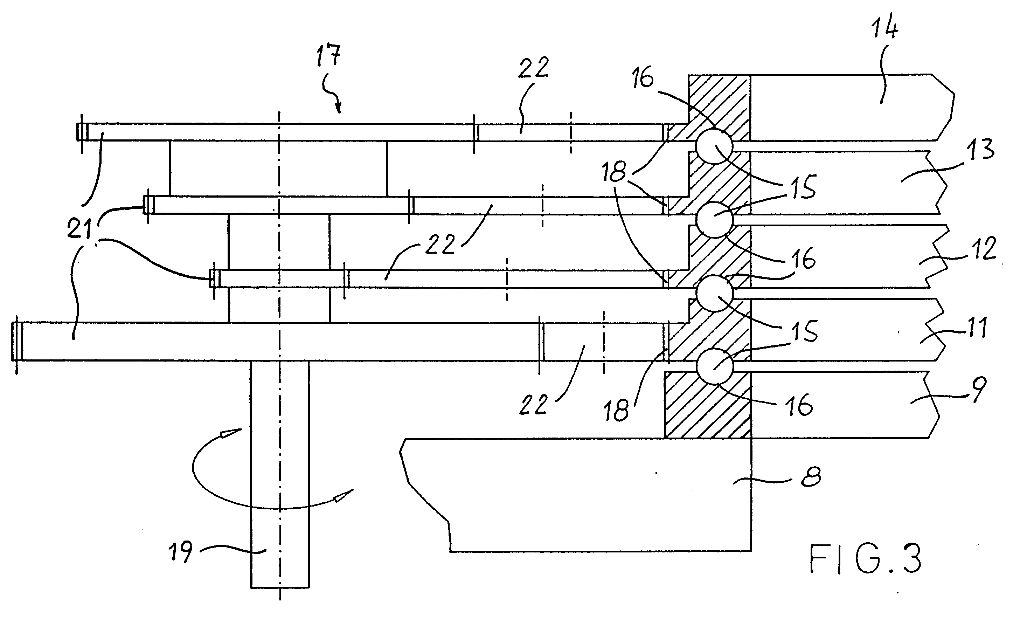

Der Antrieb der Drehkränze 11 bis 14 mit unterschiedlichen Geschwindigkeiten kann über einen jedem Drehkranz zugeordneten gesonderten Motor oder über ein Reversiergetriebe 17 erfolgen, wie es in Fig. 3 dargestellt ist. Hierzu sind die Drehkränze 11 bis 14 an ihrem Außenumfang jeweils mit einer Mitnahmeeinrichtung 18, bei dem dargestellten Beispiel in Form einer um den Außenumfang der Drehkränze gebildeten Außenverzahnung, für ihre Antriebsverbindung mit dem Reversiergetriebe 17 versehen, das seitlich außerhalb des Drehkranzpakets 10 am Vorrichtungsgestell 3 in nicht näher dargestellter Weise befestigt ist. Das Reversiergetriebe 17 besitzt eine von einem geeigneten Motor (nicht dargestellt) reversierend antreibbare Antriebswelle 19, die parallel zur vertikalen Achse 20 des Drehkranzpakets 10 ausgerichtet ist. In senkrechten Abständen übereinander sind auf der Antriebswelle 19 Antriebsräder 21, bei dem dargestellten Beispiel Zahnräder, festgelegt, die jeweils mit der gleichebenigen Mitnahmeeinrichtung bzw. Außenverzahnung 18 des zugehörigen Drehkranzes 11 bis 14 über Zwischenräder 22 in Antriebsverbindung gehalten sind. Durch entsprechende Durchmesserwahl der Antriebsräder 21 erhalten die jeweiligen Drehkränze 11 bis 14 die zutreffende Untersetzung für ihre entsprechend vorgesehene Umlaufgeschwindigkeit über die Zwischenräder 22, die einen gleichen Abstand zwischen der Antriebswelle 19 und der Achse 20 des Drehkranzpakets 10 in jeder Antriebsübertragungsebene gewährleisten.

Am Innenumfang des untersten Drehkranzes 11 ist ein Halterahmen 23 befestigt, der zwei einander diametral gegenüberliegende Umfangsteile 24 mit je einem vertikalen Tragschenkel 25 umfaßt. An den einander gegenüberliegenden Tragschenkeln 25 ist eine Flachlegevorrichtung 26 mit zwei um horizontale Achsen drehbaren Abquetschwalzen 27 und zwei zu diesen hin konvergierenden Flachlegeplatten 28 angebracht. Die Montage der Flachlegevorrichtung 26 ist an dem aus dem Drehkranzpaket 10 nach unten herausgeführten Bereich der vertikalen Tragschenkel 25 vorgenommen. Im oberen, aus dem Drehkranzpaket 10 oberseitig herausgeführten Bereich der vertikalen Tragschenkel 25 ist eine Führungswalze 29 frei drehbar innerhalb der zylindrischen inneren Hüllebene des Drehkranzpakets 10 frei drehbar angebracht, die im wesentlichen senkrecht über dem von den Abquetschwalzen 27 definierten Walzenspalt in einer solchen Höhe angeordnet ist, daß die Schlauchbahn 1′, ohne die Oberkante des obersten Drehkranzes 14 zu berühren, einer ersten, unteren Umlenkwalze 30 zuläuft. Vorzugsweise liegt ihre obere kulminierende Mantellinie oberhalb der von der Oberseite des obersten Drehkranzes 14 eingenommenen Horizontalebene, die gleichzeitig unmittelbar an diejenige Horizontalebene angrenzt, die von der ersten, unteren Umlenkwalze 30 mit ihrer unteren kulminierenden Mantellinie eingenommen wird. Die Umlenkwalze 30 ist an den freien Enden von Tragarmen 31 drehbar gelagert, die von dem oberen Endbereich des jeweiligen vertikalen Tragschenkels 25 des Halterahmens 23 ausgehen. Der Drehkranz 11 wird vom Reversiergetriebe 17 mit einer Umlaufgeschwindigkeit angetrieben, die einer reversierenden Schwenkbewegung von 360°, d.h. +/- 180° ausgehend von einer Mittelstellung der Flachlegevorrichtung 26, entspricht. Die Umsteuerung des Reversiergetriebes 17 am Ende des jeweiligen Schwenkbewegungsanteils des Drehkranzes 11 kann über geeignete Endschalter erfolgen. Die gleiche reversierende Schwenkbewegung von 360° vollziehen demgemäß die vom Drehkranz 11 gehaltenen Teile des Reversiersystems, d.h. die Flachlegevorrichtung 26 mit ihren Abquetschwalzen 27 und den Flachlegeplatten 28 sowie die Führungswalze 29 und die Umlenkwalze 30.

Auf die Umlenkwalze 30 folgt in Laufrichtung der Schlauchbahn 1 bzw. 1′ gesehen innerhalb des reversierenden Systems eine erste Wendestange 32, die in an sich bekannter Weise als sog. Luftwendestange ausgebildet sein kann, die zur Schlauchbahnumlenkung mit einer Luftdüsenreihe versehen ist. Die Wendestange 32 ist dabei drehfest an Halteschienen 33 angebracht, die an einander diametral gegenüberliegenden Stellen am Außenumfang des obersten Drehkranzes 14 befestigt sind und zwischen ihren äußeren Enden 34 die Wendestange 32 undrehbar festlegen. Der Drehkranz 14 erhält vom Reversiergetriebe 17 eine Umlaufgeschwindigkeit für einen Schwenkwinkel seiner Wendestange 32 von 270°.

Eine zweite, obere Umlenkwalze 35 ist mittels Halteschienen 36 am Außenumfang des Drehkranzes 13 befestigt. Die Halteschienen 36 sind wiederum an einander diametral gegenüberliegenden Stellen am Außenumfang des Drehkranzes 13 befestigt, und zwischen ihren nach außen geführten, einander gegenüberliegenden Enden 37 ist die Umlenkwalze 35 frei drehbar gelagert. Der Drehkranz 13 erhält vom Reversiergetriebe 17 eine Umlaufgeschwindigkeit für einen reversierenden Schwenkwinkel seiner Umlenkwalze 35 um die vertikale Achse 20 des Drehkranzpakets 10 von 180°.

Eine auf die Umlenkwalze 35 folgende Wendestange 38, die wie die Wendestange 32 als Luftwendestange ausgebildet sein kann, ist mittels einander diametral gegenüberliegend am Außenumfang des Drehkranzes 12 befestigter Halteschienen 39 am Drehkranz 12 abgestützt, wobei sie mit ihren Stirnenden undrehbar zwischen den äußeren Enden 40 der Halteschienen 39 festgelegt ist. Der Drehkranz 12 erhält vom Reversiergetriebe 17 eine Umlaufgeschwindigkeit für eine reversierende Schwenkbewegung der Wendestange 38 von 90°.

Im wesentlichen in der gleichen Horizontalebene wie die obere Wendestange 38 ist als ortsfeste Fördereinrichtung zum Abtransportieren der flachgelegten Schlauchbahn 1 eine Umlenkwalze 41 frei drehbar am Vorrichtungsgestell 3 abgestützt. Hierzu sind die vertikalen Stützen 4 und 5 des Vorrichtungsgestells 1 mit waagerechten oberen Tragarmen 42 versehen, zwischen deren freien Enden die Umlenkwalze 41 drehbar gelagert ist.

Die Umlenkwalzen 30 und 35 sowie die Wendestangen 32 und 38 sind mittels ihrer jeweiligen Halteschienen 31, 33, 36 und 39 in einem Bereich oberhalb und außerhalb des Drehkranzpakets 10 gehalten. Die äußeren Endbereiche 31a, 34, 37 und 40 der Halteschienen 31, 33, 36 und 39 der Umlenkwalzen und Wendestangen bzw. die Umlenkwalzen 30, 35 und die Wendestangen 32, 38 selbst definieren bei ihrer reversierenden Schwenkbewegung um die Achse 20 des Drehkranzpakets 10 mit unterschiedlichen Umlaufgeschwindigkeiten entsprechend den mit zunehmender Entfernung von den Abquetschwalzen 27 abnehmenden Schwenkwinkeln Stör- oder Grenzkreise mit unterschiedlichem Radius. Dabei ist der vom Drehkranz 11 mit seiner Umlenkwalze 30 beschriebene Störkreis der kleinste und vom Störkreis des Drehkranzes 14 mit der Wendestange 32 umgeben. Der nächstgrößere Störkreis ist derjenige des Drehkranzes 13 mit der Umlenkwalze 35, und der Störkreis des Drehkranzes 12 mit der oberen Wendestange 38 ist der größte Störkreis, der sämtliche anderen Störkreise umgibt. Dies gewährleistet im Reversierbetrieb der Abzugsvorrichtung eine gegenseitig störeingriffsfreie Schwenkbewegung der Umlenkwalzen 30, 35 und der Wendestangen 32, 38 unter Berücksichtigung ihrer unterschiedlichen Schwenkwinkel bzw. unterschiedlichen Umlaufgeschwindigkeiten.

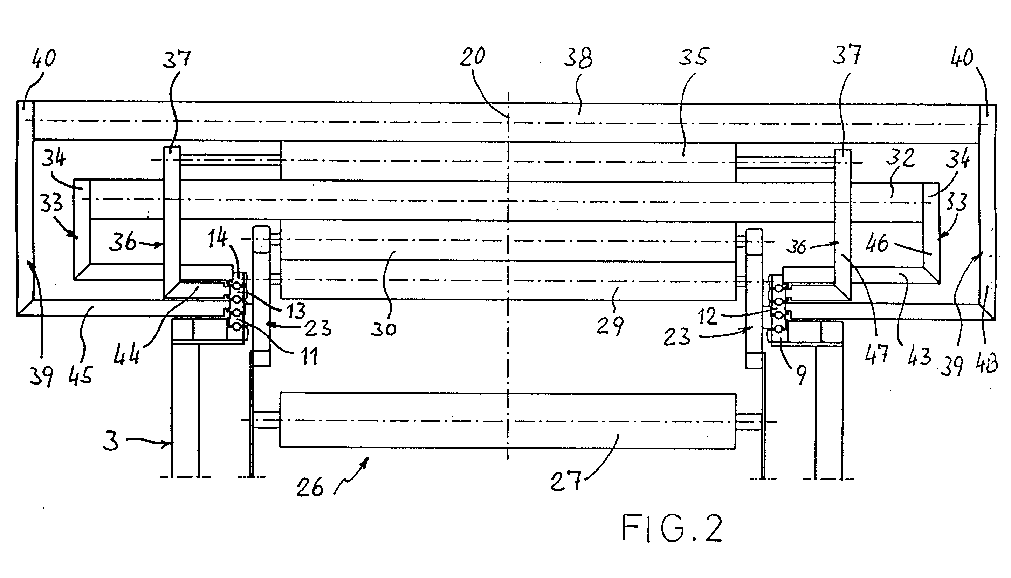

Zur Ausbildung dieser Grenz- bzw. Störkreise mit unterschiedlichem Radius sind die Außenschienen 33, 36 und 39 der um die innenseitig am unteren Drehkranz 11 mit einfachen geraden Halteschienen 31 angebrachte Umlenkwalze 30 herumgeführten Störkreise mit horizontalen Schienenteilen 43 bzw. 44 und 45 versehen, um die entsprechenden Störkreise entsprechend weit nach außen zu verlagern, wie dies insbesondere aus Fig. 2 ersichtlich ist. Ferner läßt Fig. 2 mit besonderer Deutlichkeit erkennen, daß die Umlenkwalze 30, die Wendestange 32, die Umlenkwalze 35 und die Wendestange 38 in unterschiedlichen horizontalen Ebenen übereinander in der Weise angeordnet sind, daß ihre gegenüberliegenden Mantellinien jeweils in einer gemeinsamen horizontalen Ebene liegen. Um dies zu erreichen, umfassen die Schienen 33, 36 und 39 der Drehkränze 14, 13 und 12 vertikale Schienenteile 46, 47 und 48 von entsprechender Höhe, wie dies Fig. 2 veranschaulicht.

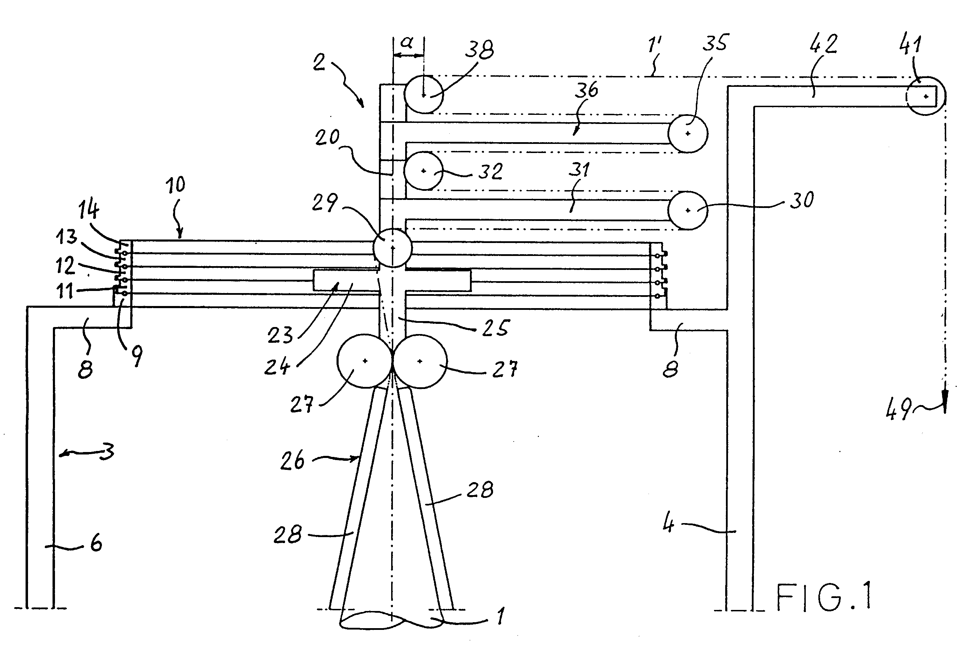

Der von den beiden Abquetschwalzen 27 der Flachlegevorrichtung 26 definierte Walzenspalt liegt, wie dies insbesondere aus Fig. 1 ersichtlich ist, zentrisch zur Drehachse 20 des Drehkranzpakets 10, die ihrerseits in Verlängerung der Mittelachse 47 der den Abquetschwalzen 27 zulaufenden Schlauchbahn 1 angeordnet ist. Üblicherweise ist eine der beiden Abquetschwalzen 27 ortsfest montiert, während die andere abschwenkbar an den Tragschenkeln 25 abgestützt ist. Dieses Abschwenken ist für das Einziehen der Schlauchbahn 1 zu Beginn eines Extrusionsvorgangs erforderlich. Mittels der hierzu verwendeten druckmittelbetätigten Zylinder, Federn und dgl. Druckmittel läßt sich auch der Anpreßdruck der Abquetschwalzen 27 zueinander und damit die Druckeinwirkung auf die durch den Walzenspalt hindurchbeförderte, sodann flachgelegte Schlauchbahn 1 einstellen. Die fest montierte Abquetschwalze 27 ist über einen drehzahlregelbaren Motor (nicht dargestellt) antreibbar.

Die Wendestangen 32 und 38 weisen eine mit einem Abstand a von der Drehachse 20 des Drehkranzpakets 10 verlaufende Grundstellung auf. Dieser Abstand a entspricht dem Radius eines von dem Schwenkweg der Achsen der Wendestangen 32 und 38 im Reversierbetrieb umschriebenen Kreises um die Drehachse 20 und errechnet sich nach der Formel Wendestangendurchmesser x π/4. Ein Abschwenken der Wendestangen 32 und 38 zum Einziehen der Schlauchbahn 1 zu Beginn eines Extrusionsvorgangs ist bei dieser Ausgestaltung nicht erforderlich, da oberhalb des Drehkranzpakets 10 unbeschränkte Arbeitsfreiheit gegeben ist. Es versteht sich im übrigen, daß die Wendestangen 32 und 38 lang genug sein müssen, um die Schlauchbahn 1 aufnehmen zu können, wobei ihre maximale Schrägstellung, bei dem dargestellten Beispiel 45°, auch die Anordnung der Umlenkwalzen 30 und 35 bestimmt, wie dies dem Fachmann grundsätzlich geläufig ist.

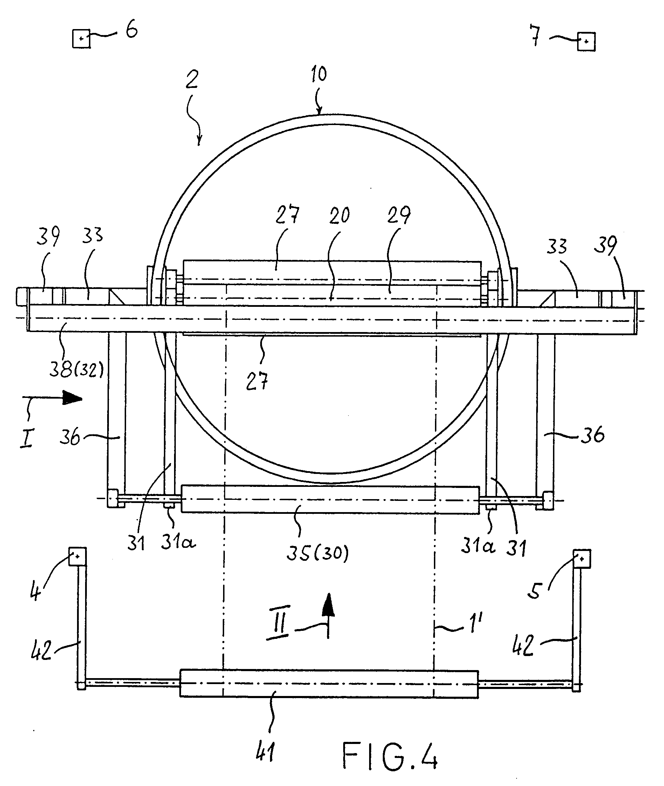

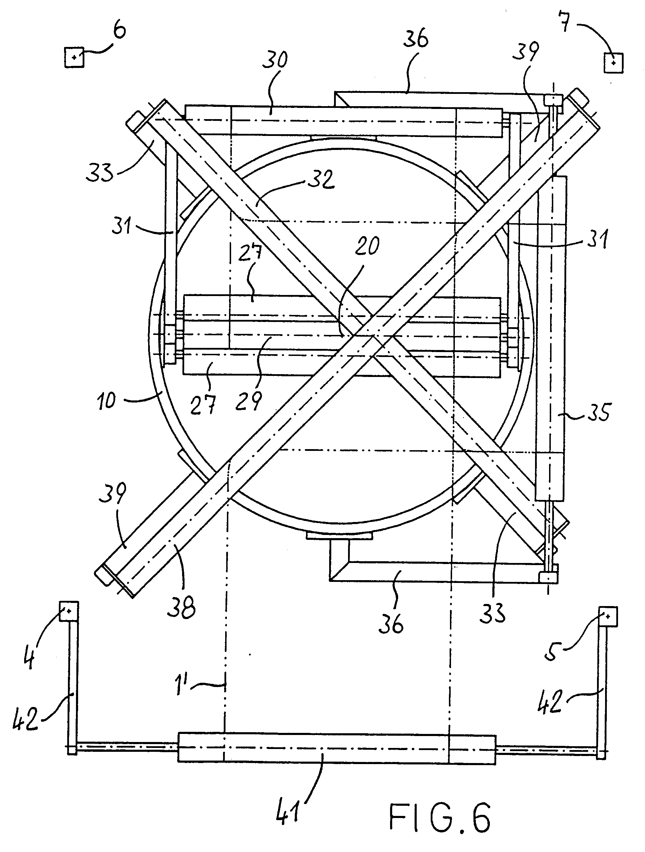

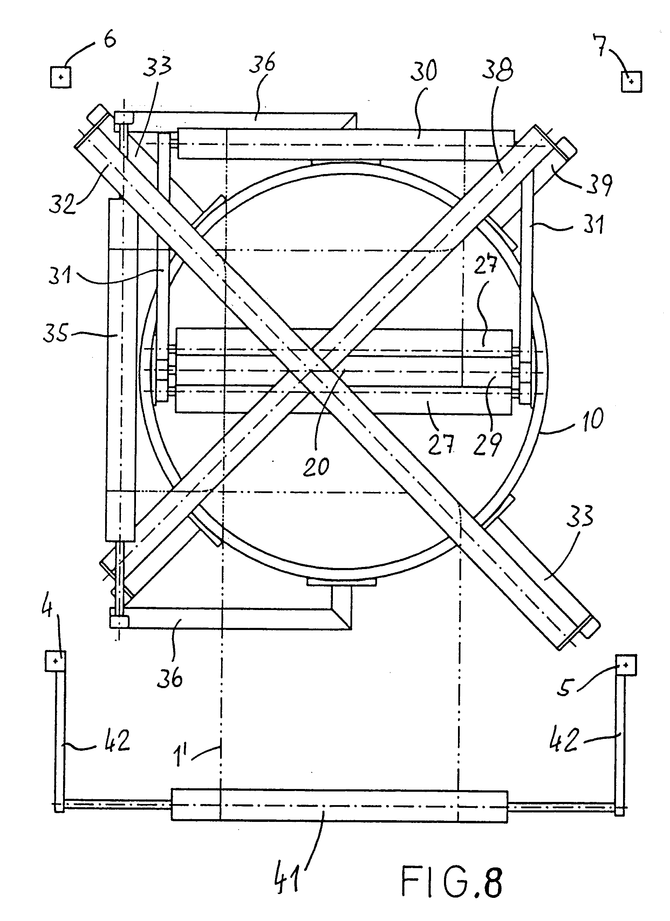

Im Betrieb der Abzugsvorrichtung wird die zwischen den Abquetschwalzen 27 flachgelegte Schlauchbahn 1′ entsprechend den in Fig. 1 sowie in den Fig. 4 bis 10 eingezeichneten strichpunktierten Linien durch die Vorrichtung 2 hindurchgeführt. Dabei wird die flachgelegte Schlauchbahn 1′ zunächst der mit ihrer Achse in der Drehachse 20 des Drehkranzpakets 10 liegenden Führungswalze 29 im wesentlichen in senkrechter Richtung zugeführt, um unter leichter Umschlingung oben über diese hinweg zur Umlenkwalze 30 geführt zu werden. Grundsätzlich wäre es auch möglich, die flachgelegte Schlauchbahn 1′ vom Abquetschwalzenpaar 27 direkt zur Umlenkwalze 30 zu führen, was jedoch eine ansonsten nicht erforderliche und daher unwirtschaftliche Vergrößerung des Durchmessers des Drehkranzpakets 10 für die Hindurchführung der Schlauchbahn 1′ zur Folge hätte. Unter Umschlingung der Umlenkwalze 30 wird die Schlauchbahn 1′ der Wendestange 32 zugeführt, umschlingt diese wiederum und wird über deren Oberseite der Unterseite der Umlenkwalze 35 zugeführt, die sie wiederum umschlingt, um von deren Oberseite der Unterseite der oberen Wendestange 38 zugeführt zu werden. Die Schlauchbahn 1′ läuft innenseitig um die Wendestange 38 herum und wird von deren Oberseite der gleichebenigen ortsfesten Umlenkwalze 41 zugeführt, von der sie senkrecht nach unten entsprechend dem Pfeil 49 in Fig. 1 einer ortsfesten Wickelvorrichtung zugeführt wird. Die Schlauchbahn 1′ wird dabei zwischen den Umlenkwalzen 30, 35 und den Wendestangen 32, 38 abwechselnd nach außen und nach innen, zur Drehachse 20 des Drehkranzpakets 10 hin, geführt, wobei gleichzeitig durch die reversierend verschwenkten Teile der Abzugsvorrichtung die Dickentoleranzen der Kunststoffolie nach dem bekannten Prinzip der reversierenden Abzugsvorrichtungen gleichmäßig über die Schlauchbahn verteilt werden.

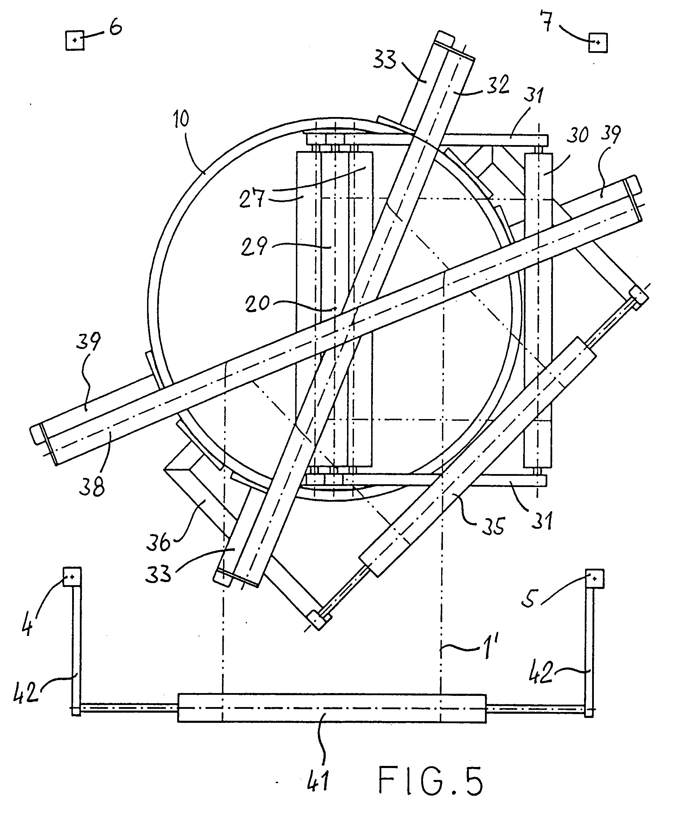

In Fig. 4 ist eine Mittelstellung der Flachlegevorrichtung 26 mit ihren Abquetschwalzen 27 veranschaulicht, aus der ersichtlich ist, daß in dieser Stellung die Umlenkwalzen 30 und 35 einerseits sowie die Wendestangen 32 und 38 in Richtung der Drehachse 20 des Drehkranzpakets 10 miteinander fluchten. Die Fig. 5 und 6 sowie 7 und 8 veranschaulichen Zwischenstellungen der Umlenkwalzen 30, 35 und der Wendestangen 32, 38 entsprechend einem jeweils durchlaufenen Schwenkwinkel von 90° und 180° der Flachlegevorrichtung 26 mit den Abquetschwalzen 27, ausgehend von der Mittelstellung gemäß Fig. 4 in beiden Richtungen des Uhrzeigers.

In Verbindung mit einer Seitenkantenreguliervorrichtung (nicht dargestellt), die im Bereich der Umlenkwalze 41 in an sich bekannter Weise den Verlauf der Schlauchbahn 1′ überwacht bzw. mißt, können die Wendestangen 32 und 38 verstellt werden, um den Schlauchbahnverlauf ggf. zu korrigieren. Hierzu werden die von der Seitenkantenüberwachungseinheit ermittelten Werte an eine Regeleinheit weitergegeben und ausgewertet. Über die Regeleinheit kann ein Stellglied angesteuert werden, das eine entsprechende Verstellung vornimmt. Diese Regel- und Stellvorgänge sind dem Fachmann geläufig und bedürfen daher hier insoweit keiner näheren Darstellung oder Beschreibung.

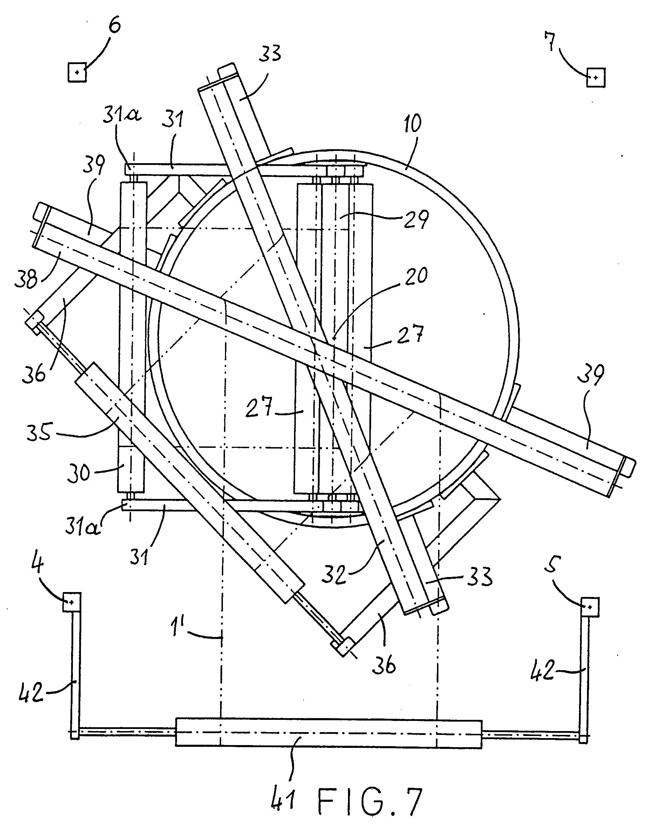

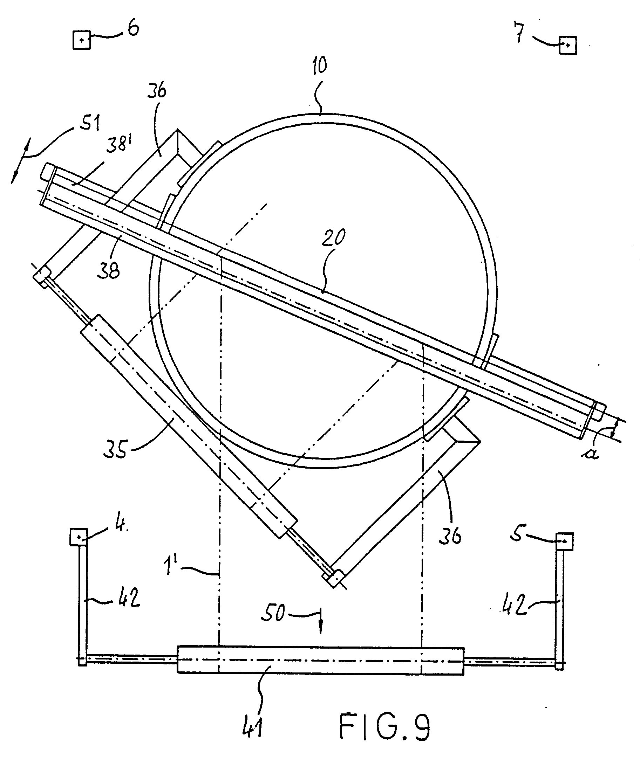

Bei der vorliegenden Abzugsvorrichtung 2 reicht eine Verstellung der oberen Wendestange 38 aus, um ggf. einem aus welchen Gründen auch immer auftretenden seitlichen Verlauf der Schlauchbahn 1′ entgegenzuwirken. Hierzu kann das Abstandsmaß a, das die Wendestange 38 in ihrer Grundstellung von der Drehachse 20 des Drehkranzpakets 10 einhält, verändert werden. Die Veränderung des Abstandsmaßes a kann beispielsweise dadurch erfolgen, daß die Wendestange 38 in radialer Richtung zum Drehkranzpaket 10 verschoben wird. Dies ist in Fig. 9 veranschaulicht, die eine vereinfachte Darstellung der Abzugsvorrichtung in einer Betriebsstellung gemäß Fig. 7 ist. Wird das Maß a verkleinert, wie dies bei 38′ dargestellt ist, so verläuft die Schlauchbahn 1′, in Laufrichtung 50 gesehen, weiter nach links, während umgekehrt bei einer Vergrößerung des Maßes a ein Verlauf der Schlauchbahn 1′ weiter nach rechts eintritt. Zur Durchführung der radialen Verschiebbarkeit entsprechend dem Doppelpfeil 51 in Fig. 9 ist die Wendestange 38 in nicht näher dargestellter Weise verstellbar am Drehkranz 12 abgestützt.

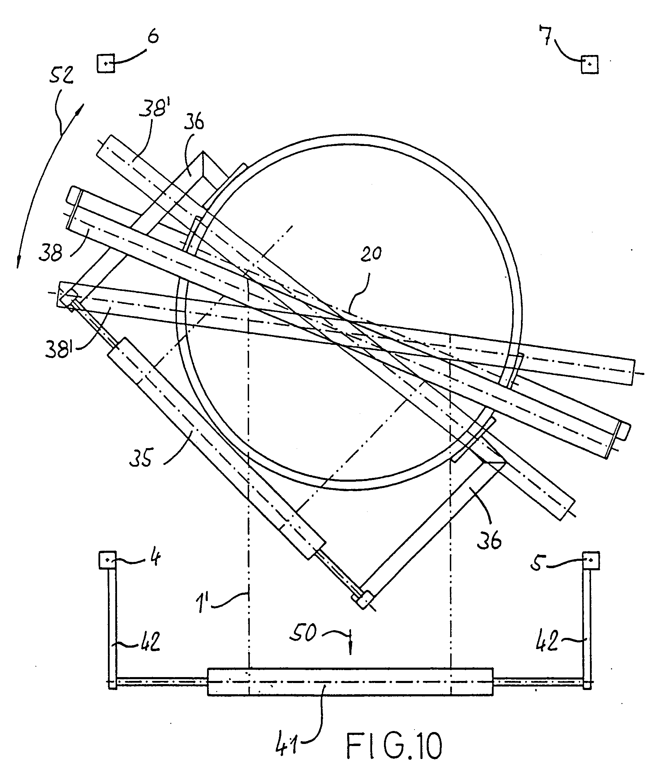

Eine weitere Möglichkeit der Verstellung der Wendestange 38 zur Beeinflussung des Schlauchbahnverlaufs veranschaulicht Fig. 10 in einer Darstellung entsprechend Fig. 9. Nach dieser Ausführungsform ist die Wendestange 38 am zugehörigen Drehkranz 12 um eine vertikale Achse verschwenkbar abgestützt, wobei diese Schwenkbewegung der Wendestange 38 der reversierenden Schwenkbewegung des Drehkranzes 12 in geeigneter Weise überlagert sein kann. Steht die Wendestange 38 zum Beispiel zu einem gegebenen Zeitpunkt während ihrer Schwenkbewegung auf einem Winkel von 30°, so kann sie durch entsprechende Steuerimpulse so entsprechend dem Doppelpfeil 52 verschwenkt werden, daß sie zu dem gegebenen Zeitpunk ihrer Schwenkbewegung eine entsprechend veränderte Winkelstellung einnimmt, wie dies Fig. 10 bei 38′ jeweils veranschaulicht. Dies hat wiederum eine entsprechende seitliche Verlagerung der Schlauchbahn 1′ im Sinne einer Seitenkantenregulierung zur Folge.

## Patentansprüche

1. Abzugsvorrichtung (2) für von einem Extruder mit ortsfest angeordnetem Blaskopf hergestellte Schlauchbahnen aus Kuststoffolie, mit einer zwei um horizontale Achsen drehbare Abquetschwalzen (27) umfassenden Flachlegevorrichtung (26) für die mit aufgeweitetem Rundquerschnitt zugeführte Schlauchbahn (1) und mit einer ortsfesten Fördereinrichtung zum Abtransportieren der flachgelegten Schlauchbahn (1') zu einer ihrerseits ortsfesten Wickelvorrichtung, wobei zwischen der Flachlegevorrichtung (26) und der ortsfesten Fördereinrichtung zumindest eine Umlenkwalze (30) und zumindest eine Wendestange (32) zum Umlenken der Schlauchbahn (1) um jeweils 180° unter gleichzeitiger Richtungsänderung angeordnet sind, die, ebenso wie die Flachlegevorrichtung (26), in einer horizontalen Ebene um die Achse der zugeführten Schlauchbahn reversierend in einem Vorrichtungsgestell (3) schwenkbar abgestützt sind, und die Flachlegevorrichtung (26), die Umlenkwalze (30) und die Wendestange (32) für ihre reversierende Schwenkbewegung an senkrecht übereinander angeordneten Drehkränzen (11,14) gehalten sind, deren Innendurchmesser zumindest gleich der maximalen Arbeitsbreite der Vorrichtung (2) ist, **dadurch gekennzeichnet,** daß das Vorrichtungsgestell (3) einen oberen horizontalen Auflagerteil (8) mit einem Halterahmen (9) zur drehbaren unterseitigen Abstützung der Drehkränze (11,14) umfaßt und die Drehkränze (11,14) und der Halterahmen (9) zur Ausbildung eines um die Achse der Schlauchbahn (1) drehbaren, auf Druck beanspruchten Drehkranzpaketes (10) unmittelbar aufeinander bzw. auf dem Halterahmen (9) über zwischengelegte Walzkörper (15) abgestützt sind, die in in den einander gegenüberliegenden Stirnflächen der Drehkränze (11,14) und des Halterahmens (9) eingearbeiteten Laufrillen (16) mit engem Laufspiel geführt sind.

2. Vorrichtung nach Anspruch 1, dadurch gekennzeichnet, daß das Drehkranzpaket (10) von zumindest zwei Drehkränzen (11,14) gebildet ist, von denen ein Drehkranz (11) die Flachlegevorrichtung (26) und die Umlenkwalze (30) und der andere Drehkranz (14) die Wendestange (32) abstützt.

3. Vorrichtung nach den Ansprüchen 1 und 2, dadurch gekennzeichnet, daß das Drehkranzpaket (10) einen dritten und einen vierten Drehkranz (12,13) umfaßt, wobei an dem dritten Drehkranz (13) eine weitere Umlenkwalze (35) und an dem vierten Drehkranz (12) eine weitere Wendestange (38) für ihre reversierende Schwenkbewegung abgestützt ist.

4. Vorrichtung nach den Ansprüchen 1 bis 3, dadurch gekennzeichnet, daß die Umlenkwalzen (30,35) und die Wendestangen (32,38) entsprechend ihrem mit steigender Entfernung von den Abquetschwalzen (27) abnehmenden Schwenkwinkel den einzelnen, mit entsprechend unterschiedlichen Umfangsgeschwindigkeiten angetriebenen Drehkränzen (11,12,13,14) zugeordnet sind.

5. Vorrichtung nach Anspruch 4, dadurch gekennzeichnet, daß die beiden mittleren Drehkränze (12,13) jeweils eine geringere Umfangsgeschwindigkeit als der angrenzende unterste (11) bzw. oberste Drehkranz (14) des Drehkranzpakets (10) aufweisen.

6. Vorrichtung nach Anspruch 4 oder 5, dadurch gekennzeichnet, daß zur Abstützung der in unterschiedlichen, aneinandergrenzenden horizontalen Ebenen abwechselnd aufeinanderfolgend angeordneten Umlenkwalzen (30,35) und Wendestangen (32,38) die untere Umlenkwalze (30) mit dem untersten Drehkranz (11), die darauf folgende untere Wendestange (32) mit dem obersten Drehkranz (14), die obere Umlenkwalze (35) mit dem zweitobersten Drehkranz (13) und die obere Wendestange (38) mit dem zweituntersten Drehkranz (12) des Drehkranzpakets (10) verbunden ist.

7. Vorrichtung nach einem der Ansprüche 1 bis 6, dadurch gekennzeichnet, daß die Drehkränze (11,12,13,14) mit aus dem vom Drehkranzpaket (10) umschriebenen zylindrischen Innenraum herausführenden Halteschienen (31,33,36,39) versehen sind, an deren äußeren Enden die Umlenkwalzen (30,35) und die Wendestange oder Wendestangen (32,38) jeweils abgestützt sind.

8. Vorrichtung nach Anspruch 7, dadurch gekennzeichnet, daß die Umlenkwalzen (30,35) und die Wendestange oder Wendestangen (32,38) mittels der Halteschienen (31,33,36,39) in einem Bereich oberhalb und außerhalb des Drehkranzpakets (10) gehalten sind.

9. Vorrichtung nach Anspruch 7 oder 8, dadurch gekennzeichnet, daß die Halteschienen (31,33,36,39) der Umlenkwalzen (30,35) und der Wendestange oder Wendestangen (32,38) mit ihren äußeren Endbereichen Grenzkreise mit unterschiedlichem Radius beschreiben und mit ihrer Verbindung zu dem jeweiligen Drehkranz (11,12,13,14) eine störeingriffsfreie reversierende Schwenkbewegung der Umlenkwalzen und der Wendestange oder Wendestangen mit unterschiedlichen Schwenkwinkeln zulassen.

10. Vorrichtung nach Anspruch 9, dadurch gekennzeichnet, daß der Grenzkreis des untersten Drehkranzes (11) vom Grenzkreis des obersten Drehkranzes (14) umgeben, dieser vom Grenzkreis des zweitobersten Drehkranzes (13) umgeben und dieser wiederum vom Grenzkreis des zweituntersten Drehkranzes (12) umgeben ist.

11. Vorrichtung nach einem der Ansprüche 1 bis 10, dadurch gekennzeichnet, daß die Flachlegevorrichtung (26) und die untere Umlenkwalze (30) an der Innenseite des untersten Drehkranzes (11) befestigt sind, während die Wendestange oder Wendestangen (32,38) und die obere Umlenkwalze (35) jeweils an der Außenseite des zugehörigen der übrigen Drehkränze (12,13,14) befestigt sind.

12. Vorrichtung nach einem der Ansprüche 1 bis 11, dadurch gekennzeichnet, daß der die Flachlegevorrichtung (26) und die untere Umlenkwalze (30) abstützende Drehkranz (11) zusätzlich eine Führungswalze (29) innerhalb der zylindrischen inneren Hüllebene des Drehkranzes (10) trägt, die oberhalb der Abquetschwalzen (27) in einer an die der unteren Umlenkwalze (30) angrenzenden Horizontalebene angeordnet ist.

13. Vorrichtung nach Anspruch 12, dadurch gekennzeichnet, daß die Führungswalze (29) im wesentlichen senkrecht über dem von den Abquetschwalzen (27) definierten Walzenspalt an einem Abquetschwalzen-Halterahmen (25) drehbar abgestützt ist.

14. Vorrichtung nach Anspruch 12 oder 13, dadurch gekennzeichnet, daß die Führungswalze (29) mit ihrer kulminierenden Mantellinie oberhalb der von der Oberseite des obersten Drehkranzes (14) des Drehkranzpakets (10) eingenommenen Horizontalebene angeordnet ist.

15. Vorrichtung nach einem der Ansprüche 1 bis 14, dadurch gekennzeichnet, daß die Drehkränze (11,12,13,14) mit einer außenseitigen Mitnahmeeinrichtung (18) für eine Antriebsverbindung mit einem seitlich außerhalb des Drehkranzpakets (10) am Vorrichtungsgestell (3) abgestützten Reversiergetriebe (17) versehen sind.

16. Vorrichtung nach Anspruch 15, dadurch gekennzeichnet, daß das Reversiergetriebe (17) eine parallel zur Achse (20) des Drehkranzpakets (10) ausgerichtete Antriebswelle (19) mit in senkrechten Abständen übereinander festgelegten Antriebsrädern (21) aufweist, die jeweils mit der gleichebenigen Mitnahmeeinrichtung (18) des zugehörigen Drehkranzes (11,12,13,14) in Antriebsverbindung gehalten sind.

17. Vorrichtung nach Anspruch 15 oder 16, dadurch gekennzeichnet, daß die Mitnahmeeinrichtung (18) der Drehkränze (11,12,13,14) von einer Außenverzahnung um den Außenumfang der Drehkränze gebildet ist.

18. Vorrichtung nach einem der Ansprüche 1 bis 17, dadurch gekennzeichnet, daß die Wälzkörper (15) von Kugeln gebildet sind, die in Laufrillen (16) in den einander gegenüberliegenden Stirnflächen der Drehkränze (11,12,13,14) und eines gestellseitigen Halteringes (9) für das Drehkranzpaket (10) geführt sind.

19. Vorrichtung nach einem der Ansprüche 1 bis 18, dadurch gekennzeichnet, daß die Wendestange oder Wendestangen (32,38) eine mit Abstand von der vertikalen Drehachse (20) des Drehkranzpaketes (10) verlaufende Grundstellung aufweisen, in der der Radius des von dem Schwenkweg ihrer Achsen umschriebenen Kreises um die Drehachse (20) des Drehkranzpaketes (10) gleich dem Wendestangendurchmesser x π/4 ist, und daß zumindest eine Wendestange (z.B. 38) für eine wahlweise Veränderung des Wendestangenabstands von der Drehachse (20) des Drehkranzpakets verstellbar am zugehörigen Drehkranz (12) abgestützt ist.

20. Vorrichtung nach Anspruch 19, dadurch gekennzeichnet, daß die Wendestange (38) am zugehörigen Drehkranz (12) in radialer Richtung zu diesem verschiebbar abgestützt ist.

21. Vorrichtung nach Anspruch 19, dadurch gekennzeichnet, daß die Wendestange (38) am zugehörigen Drehkranz (12) um eine vertikale Achse verschwenkbar abgestützt ist.

22. Vorrichtung nach Anspruch 21, dadurch gekennzeichnet, daß die Schwenkbewegung der Wendestange (38) um die vertikale Achse der reversierenden Schwenkbewegung des zugehörigen Drehkranzes (12) überlagert ist.

23. Vorrichtung nach einem der Ansprüche 19 bis 22, dadurch gekennzeichnet, daß die Veränderung der Wendestangenposition während des Reversierbetriebs des Drehkranzpaketes (10) von einer den seitlichen Schlauchbahnverlauf überwachenden Seitenkantenreguliervorrichtung steuerbar ist.

## Claims

1. A pull-off device (2) for strips of tubular synthetic plastics film produced by an extruder with a rigidly disposed blower head, with a flat laying device (26) comprising two squeezer rollers (27) rotatable about horizontal axes and intended for the tubular strip (1) which is supplied with a widened-out circular cross-section, and with a rigidly disposed conveyor means for carrying away the flattened tubular strip (1') to a winding device rigid on its side, whereby between the flat laying device (26) and the rigid conveyor means there are at least one direction-changing roller (30) and at least one turnover rod (32) for deflecting the tubular strip (1) through in each case 180° with a simultaneous change in direction and which, in the same way as the flat laying device (26), are supported in reversing manner in a frame (3) to pivot in a horizontal plane about the axis of the supplied tubular strip, and the flat laying device (26), the direction reversing roller (30) and the turnover rod (32) are for their reversing pivoting movement supported on vertically superposed rotary mountings (11, 14), the inside diameter of which is at least equal to the maximum working width of the device (2), characterised in that the device frame (3) comprises an upper horizontal supporting part (8) with a holding frame (9) for rotatably supporting the bottom part of the rotary mountings (11, 14), the rotary mountings (11, 14) and the holding frame (9) being supported directly on one another or on the holding frame (9) through interposed rolling-type bearings (15) in order to form a compression-stressed rotary mounting package (10) which is rotatable about the axis of the tubular strip, the said rolling-type bearings (15) being guided with close tolerance in grooves (16) machined into the oppositely disposed end faces of the rotary mountings (11, 14) and holding frame (9).

2. A device according to claim 1, characterised in that the rotary mounting package (10) consists of at least two rotary mountings (11, 14) of which one rotary mounting (11) supports the flat laying device (26) and the reversing roller (30) while the other rotary mounting (14) supports the turnover rod (32).

3. A device according to claims 1 and 2, characterised in that the rotary mounting package (10) comprises a third and a fourth rotary mounting (12, 13) whereby a further direction diverting roller (35) is supported on the third rotary mounting (13) while the fourth rotary mounting (12) supports a further turnover rod (38) for its reversing pivoting movement.

4. A device according to claims 1 to 3, characterised in that the diverting rollers (30, 35) and the turnover rods (32, 38), corresponding to their pivot angle which diminishes with increasing distance from the squeezing rollers (27), are associated with the individual rotary mountings (11, 12, 13, 14) which are driven at correspondingly varying peripheral speeds.

5. A device according to claim 4, characterised in that the two middle rotary mountings (12, 13) each have a lesser peripheral speed than the adjacent bottommost (11) or topmost rotary mounting (14) of the rotary mounting package (10).

6. A device according to claim 4 or 5, characterised in that for supporting the diverting rollers (30, 35) and turn-over rods (32, 38) which are disposed alternately and successively in different adjacent horizontal planes, the bottom diverting roller (30) is connected to the lowest rotary mounting (11), the next lower turnover rod (32) is connected to the topmost rotary mounting (14), the upper diverting roller (35) is connected to the rotary mounting (13) which is second from the top and the top turnover rod (38) is connected to the rotary mounting (12) which is second from the bottom in the rotary mounting package (10).

7. A device according to one of claims 1 to 6, characterised in that the rotary mountings (11, 12, 13, 14) are provided with supporting rails (31, 33, 36, 39) leading out of the cylindrical interior circumscribed by the rotary mounting package (10), the diverting rollers (30, 35) and the turnover rod or rods (32, 38) being in each case supported on the outer ends of the said rails (31, 33, 36, 39).

8. A device according to claim 7, characterised in that the diverting rollers (30, 35) and the turnover rod or rods (32, 28) are held by means of the supporting rails (31, 33, 36, 39) in an area above and outside of the rotary mounting package (10).

9. A device according to claim 7 or 8, characterised in that the outer end portions of the supporting rails (31, 33, 36, 39) of the diverting rollers (30, 35) and the turnover rod or rods (32, 38) describe boundary circles of different radius, their connection to the respective rotary mounting (11, 12, 13, 14) allowing an interference-free reversing pivoting movement of the diverting rollers and of the turnover rod or rods with different pivot angles.

10. A device according to claim 9, characterised in that the boundary circle of the lowest rotary mounting (11) is enclosed within the boundary circle of the topmost rotary mounting (14) which is enclosed within the boundary circle of the second rotary mounting (13) from the top which is in turn enclosed within the boundary circle of the rotary mounting (12) which is second from the bottom.

11. A device according to one of claims 1 to 10, characterised in that the flat-laying device (26) and the bottom diverting roller (30) are fixed on the inside of the lowest rotary mounting (11) while the turnover rod or rods (32, 38) and the upper diverting roller (35) are in each case fixed on the outside of the associated one of the other rotary mountings (12, 13, 14).

12. A device according to one of claims 1 to 11, characterised in that the rotary mounting (11) supporting the flat laying device (26) and the bottom diverting roller (30) additionally carries a guide roller (29) within the cylindrical inner envelope plane of the rotary mounting (10) which is disposed above the squeezing rollers (27) in a horizontal plane which is adjacent that of the bottom diverting roller (30).

13. A device according to claim 12, characterised in that the guide roller (29) is supported substantially at right-angles above the roller gap defined by the squeezer rollers (27) and is rotatable on a squeezer roller holding frame (25).

14. A device according to claim 12 or 13, characterised in that the guide roller (29) has its culminating generatrix situated above the horizontal plane occupied by the top of the topmost rotary mounting (14) of the rotary mounting package (10).

15. A device according to one of claims 1 to 14, characterised in that the rotary mountings (11, 12, 13, 14) are provided with an external entraining device (18) for a drive connection to a reversing gear mechanism (17) supported on the device frame (3) laterally outside the rotary mounting package (10).

16. A device according to claim 15, characterised in that the reversing gear mechanism (17) comprises a drive shaft (19) aligned parallel with the axis (20) of the rotary mounting package (10) and having drive wheels (21) fixed at vertical intervals one above another and which are held in driving connection with the entraining means (18) of the associated rotary mounting (11, 12, 13, 14) which is on the same respective plane.

17. A device according to claim 15 or 16, characterised in that the entraining means (18) of the rotary mountings (11, 12, 13, 14) are formed by externally cut teeth around the outer periphery of the rotary mountings.

18. A device according to one of claims 1 to 17, characterised in that the rolling-type bearings (15) consist of balls which are guided in grooves (16) in the oppositely disposed end faces of the rotary mountings (11, 12, 13, 14) and of a holding ring (9) on the same side as the frame and provided for the rotary mounting package (10).

19. A device according to one of claims 1 to 18, characterised in that the turnover rod or rods (32, 38) occupy a basic position extending at a distance from the vertical axis of rotation (20) of the rotary mounting package (10) and in which the radius of the circle circumscribed by the pivot path of their axes about the axis of rotation (20) of the rotary mounting package (10) is equal to the turnover rod diameter x π/4 and in that at least one turnover rod (e.g. 38) is supported in adjustable manner on the associated rotary mounting (12) for an optional varying of the distance between the turnover rod and the axis of rotation (20) of the rotary mounting package.

20. A device according to claim 19, characterised in that the turnover rod (38) is supported on the associated rotary mounting (12) and can be displaced in a radial direction to this latter.

21. A device according to claim 19, characterised in that the turnover rod (38) is supported on the associated rotary mounting (12) and can be pivotable about a vertical axis.

22. A device according to claim 21, characterised in that the pivoting movement of the turnover rod (38) about the vertical axis is superimposed on the reversing pivoting movement of the associated rotary mounting (12).

23. A device according to one of claims 19 to 22, characterised in that the variation in the turnover rod position during the reversing of the rotary mounting package (10) can be controlled by a lateral edge regulating device which monitors the pattern of movement of the sides of the tubular strip.

## Revendications

1. Dispositif de tirage (2) pour des bandes tubulaires de pellicule de matière plastique fabriquées par une extrudeuse à tête de soufflage montée fixe, avec un dispositif de mise à plat (26) pour la bande tubulaire (1) de section ronde acheminée grande ouverte comportant deux rouleaux presseurs (27) pouvant tourner autour d'axes horizontaux, et avec un dispositif transporteur fixe pour évacuer la bande tubulaire mise à plat (1') vers un dispositif envideur pour sa part fixe, étant entendu qu'entre le dispositif de mise à plat (26) et le dispositif transporteur fixe sont prévus au moins un rouleau de renvoi (30) et au moins une barre de retournement (32) pour dévier la bande tubulaire (1) chaque fois de 180° avec changement de sens de déplacement simultané, qui, tout comme le dispositif de mise à plat (26) sont montés à pivotement de manière réversible dans un bâti de dispositif (3) dans un plan horizontal autour de l'axe de la bande tubulaire acheminée, et le dispositif de mise à plat (26), le rouleau de renvoi (30) et la barre de retournement (32), pour leur mouvement de pivotement réversible, sont maintenus sur des couronnes de rotation superposées verticalement (11, 14), dont le diamètre intérieur est au moins égal à la largeur de travail maximale du dispositif (2) caractérisé en ce que le bâti (3) du dispositif comporte une partie d'appui horizontale supérieure (8) avec un cadre de retenue (9) destiné à supporter par le dessus les couronnes de rotation (11, 14) de manière à leur permettre de tourner, et les couronnes de rotation (11, 14) ainsi que le cadre de retenue (9), en vue de former un paquet de couronnes de rotation, sollicitées en pression, pouvant tourner autour de l'axe de la pellicule tubulaire (1), sont supportées directement les unes sur les autres et sur le cadre de retenue (9) par l'intermédiaire d'organes de roulement intercalaires qui sont guidés, avec un jeu étroit, dans des gorges de roulement (16) usinées dans les faces d'about des couronnes de rotation (11, 14) et du cadre de retenue qui se font face deux à deux.

2. Dispositif suivant la revendication 1, caractérisé en ce que le paquet de couronnes de rotation (10) est formé d'au moins deux couronnes de rotation (11, 14) dont une couronne de rotation (11) supporte le dispositif de mise à plat (26) et le rouleau de renvoi (30) et l'autre couronne de rotation (14) supporte la barre de retournement (32).

3. Dispositif suivant les revendications 1 et 2, caractérisé en ce que le paquet de couronnes de rotation (10) comporte une troisième et une quatrième couronnes de rotation (12, 13), étant entendu que la troisième couronne de rotation (13) supporte un autre rouleau de renvoi (35) et que la quatrième couronne de rotation (12) supporte une autre barre de retournement (38) en vue de leur mouvement de pivotement réversible.

4. Dispositif suivant les revendications 1 à 3, caractérisé en ce que les rouleaux de renvoi (30, 35) et les barres de retournement (32, 38), en conformité avec leur angle de pivotement qui va en diminuant à mesure que leur éloignement des rouleaux presseurs (27) augmente, sont affectés aux couronnes de rotation individuelles (11, 12, 13, 14) entraînées à des vitesses périphériques adéquatement différentes.

5. Dispositif suivant la revendication 4, caractérisé en ce que les deux couronnes de rotation médianes (12, 13) présentent chacune une vitesse périphérique inférieure à celle de la couronne de rotation inférieure adjacente (11) ou supérieure adjacente (14) du paquet de couronnes de rotation (10).

6. Dispositif suivant la revendication 4 ou 5, caractérisé en ce que pour le support des rouleaux de renvoi (30, 35) et des barres de retournement (32, 38) disposés consécutivement en alternance dans des plans horizontaux adjacents différents, le rouleau de renvoi inférieur (30) est relié à la couronne de rotation inférieure (11), la barre de retournement inférieure suivante (32) est reliée à la couronne de rotation supérieure (14), le rouleau de renvoi supérieur (35) est relié à la deuxième couronne de rotation (13) à partir du haut et la barre de retournement (38) est reliée à la deuxième couronne de rotation (12) à partir du bas du paquet de couronnes de rotation (10).

7. Dispositif suivant l'une quelconque des revendications 1 à 6, caractérisé en ce que les couronnes de rotation (11, 12, 13, 14) sont pourvues de bras de support (31, 33, 36, 39) qui s'étendent à l'extérieur de l'espace intérieur cylindrique circonscrit par le paquet de couronnes de rotation (10), et aux extrémités extérieures desquels sont respectivement montés les rouleaux de renvoi (30, 35) et la ou les barres de retournement (32, 38).

8. Dispositif suivant la revendication 7, caractérisé en ce que les rouleaux de renvoi (30, 35) et la ou les barres de retournement (32, 38) sont maintenus au moyen des bras de support (31, 33, 36, 39) dans une zone située au-dessus et à l'extérieur du paquet de couronnes de rotation (10).

9. Dispositif suivant la revendication 7 ou 8, caractérisé en ce que les bras de support (31, 33, 36, 39) des rouleaux de renvoi (30, 35) et de la ou des barres de retournement (32, 38) décrivent par leurs zones d'extrémité externes des cercles limites de rayons différents et autorisent, par leur liaison à leur couronne de rotation respective (11, 12, 13, 14), un mouvement de pivotement réversible, exempt de toute intervention perturbatrice, des rouleaux de renvoi et de la ou des barres de retournement avec des angles de pivotement différents.

10. Dispositif suivant la revendication 9, caractérisé en ce que le cercle limite de la couronne de rotation inférieure (11) est entouré par le cercle limite de la couronne de rotation supérieure (14), celui-ci est entouré par le cercle limite de la deuxième couronne de rotation (13) à partir du haut et celui-ci est à nouveau entouré par le cercle limite de la deuxième couronne de rotation (12) à partir du bas.

11. Dispositif suivant l'une quelconque des revendications 1 à 10, caractérisé en ce que le dispositif de mise à plat (26) et le rouleau de renvoi (30) inférieur sont fixés au côté intérieur de la couronne de rotation inférieure (11), tandis que la ou les barres de retournement (32, 38) et le rouleau de renvoi supérieur (35) sont fixés chacun au côté extérieur de la couronne concernée des couronnes de rotation restantes (12, 13, 14).

12. Dispositif suivant l'une quelconque des revendications 1 à 11, caractérisé en ce que la couronne de rotation (11) qui supporte le dispositif de mise à plat (26) et le rouleau de renvoi inférieur (30) porte, en outre, un rouleau de guidage (29) à l'intérieur du plan d'enveloppe intérieur cylindrique de la couronne de rotation (10), qui est disposé au-dessus des rouleaux presseurs (27) dans un plan horizontal adjacent à celui du rouleau de renvoi inférieur (30).

13. Dispositif suivant la revendication 12, caractérisé en ce que le rouleau de guidage (29) est monté à rotation sur un cadre (25) supportant les rouleaux presseurs, en substance verticalement au-dessus de l'emprise définie entre les rouleaux presseurs (27).

14. Dispositif suivant la revendication 12 ou 13, caractérisé en ce que le rouleau de guidage (29) est disposé par sa génératrice culminante au-dessus du plan horizontal occupé par le côté supérieur de la couronne de rotation supérieure (14) du paquet de couronnes de rotation (10).

15. Dispositif suivant l'une quelconque des revendications 1 à 14, caractérisé en ce que les couronnes de rotation (11, 12, 13, 14) sont pourvues d'un moyen d'entraînement extérieur (18) en vue d'une liaison d'entraînement à un équipage inverseur (17) monté latéralement à l'extérieur du paquet de couronnes de rotation (10) sur le bâti (3) du dispositif.

16. Dispositif suivant la revendication 15, caractérisé en ce que l'équipage inverseur (17) comporte un arbre d'entraînement (19) orienté parallèlement à l'axe (20) du paquet de couronnes de rotation (10) et comportant des roues dentées d'entraînement (21) fixées à des distances verticales les unes au-dessus des autres, qui sont maintenues chacune en liaison d'entraînement avec le moyen d'entraînement (18) situé dans le même plan, de la couronne de rotation (11, 12, 13, 14) associée.

17. Dispositif suivant la revendication 15 ou 16, caractérisé en ce que le moyen d'entraînement (18) des couronnes de rotation (11, 12, 13, 14) est formé par une denture extérieure autour de la périphérie extérieure des couronnes de rotation.

18. Dispositif suivant l'une quelconque des revendications 1 à 17, caractérisé en ce que les organes de roulement (15) sont formés par des billes qui sont guidées dans des gorges de roulement (16) prévues dans les faces d'about opposées deux à deux des couronnes de rotation (11, 12, 13, 14) et d'un anneau de support (9) situé du côté du bâti et destiné au paquet de couronnes de rotation (10).

19. Dispositif suivant l'une quelconque des revendications 1 à 18, caractérisé en ce que la ou les barres de retournement (32, 38) présentent une position de base située à distance de l'axe de rotation vertical (20) du paquet de couronnes de rotation (10), dans laquelle le rayon du cercle décrit par le trajet de pivotement de leurs axes autour de l'axe de rotation (20) du paquet de couronnes de rotation (10) est égal au diamètre de la barre de retournement x π/4, et qu'au moins une barre de retournement (par exemple, 38) est montée déplaçable sur la couronne de rotation associée (12) en vue d'une modification facultative de la distance séparant la barre de retournement de l'axe de rotation (20) du paquet de couronnes de rotation.

20. Dispositif suivant la revendication 19, caractérisé en ce que la barre de retournement (38) est montée sur la couronne de rotation associée (12) déplaçable dans un sens radial par rapport à celle-ci.

21. Dispositif suivant la revendication 19, caractérisé en ce que la barre de retournement (38) est montée à pivotement autour d'un axe vertical sur la couronne de rotation associée (12).

22. Dispositif suivant la revendication 21, caractérisé en ce que le mouvement de pivotement de la barre de retournement (38) autour de l'axe vertical est superposé au mouvement de pivotement réversible de la couronne de rotation associée (12).

23. Dispositif suivant l'une quelconque des revendications 19 à 22, caractérisé en ce que la modification de la position de la barre de retournement pendant le mode réversible du paquet de couronnes de rotation (10) peut être commandée par un dispositif de régulation des bords latéraux surveillant l'allure latérale de la bande tubulaire.
